# FASCICULE DE BREVET EUROPEEN

(11) **EP 1 096 182 B1**
(45) Date de publication et mention de la délivrance du brevet: **06.05.2004**
(21) Numéro de dépôt: 00402713.2
(22) Date de dépôt: 03.10.2000
(51) Int. Cl.: F16J 15/10, F16J 15/16, F16J 15/32

(54) **Joint à double ligne d'étanchéité et procédé d'évaluation de la fonctionnalité d'un tel joint**
Dichtungsring mit doppelter Dichtungslinie und Verfahren zum Auswerten des Funktionierens eines solchen Ringes
Sealing ring having a double sealing line and method for assessing the functionality of such a ring

(30) Priorité: 25.10.1999 FR 9913296
(43) Date de publication de la demande: 02.05.2001
(73) Titulaire: LE JOINT FRANCAIS, 75008 Paris (FR)
(72) Inventeur: Laffond, Jean-François, 92310 Sèvres (FR); Duval-Arnould, Ludovic, 53200 Château-Gontier (FR)
(74) Mandataire: Doireau, Marc

(56) Documents cités:
- FR-A- 1 125 604
- GB-A- 762 232
- US-A- 2 983 533

## Description

L'invention se rapporte à un joint torique présentant une double ligne d'étanchéité et un procédé d'évaluation de la fonctionnalité d'un tel joint relativement à sa résistance à l'extrusion et à sa facilité au montage.

Ce type de joint est destiné aux applications qui nécessitent d'abord une fonction d'étanchéité particulièrement efficace. Ces applications concernent les raccords de circuits de climatisation, de circuits de refroidissement, et de tout circuit, dans le domaine de l'automobile, et d'outil ou de machine dans tout domaine mécanique, qui nécessite la circulation d'un fluide, - air, gaz, liquides -, par exemple robot, perceuse, machine-outil, etc.

Outre la performance du joint en étanchéité, il apparaît que deux autres propriétés sont plus spécialement à considérer pour les applications citées: il s'agit de la facilité au montage, c'est-à-dire de la réduction des efforts exercés lors du montage ou « montabilité », et de la résistance à la pression. La mise en place des pièces centrales nécessite en effet l'exercice d'efforts mécaniques sur les joints, ces efforts pouvant provoquer le retournement et/ou le vrillage du joint dans sa gorge. Par ailleurs, dans les cas de circulation de fluide sous pression élevée, d'une trentaine de bars à, par exemple, 100 ou 200 bars, le joint doit également pouvoir présenter une forte résistance pour éviter toute extrusion du joint dans les jeux de montage.

Actuellement, les joints destinés à ces types d'applications sont classiquement formés de deux joints toriques disposés dans deux gorges successives. Cette solution, outre son coût relativement élevé, présente le défaut de faire coïncider les plans de joints, sur lesquels subsistent les irrégularités du moulage, aux zones fonctionnelles assurant l'étanchéité.

D'autres solutions à joint annulaire unique ont été développées. Ces joints de type multilèvres, développés par exemple par la société MINNESOTA RUBBER, ne permettent pas d'offrir une résistance à l'extrusion suffisante lors de l'application de fortes pressions.

La présente invention vise donc à réaliser un joint à double ligne d'étanchéité qui soit résistant à l'extrusion tout en présentant un effort au montage réduit, sans présenter de risques de retournement et de vrillage au montage.

Pour atteindre cet objectif, l'invention propose un joint torique dont la section pleine présente un contour formé par quatre lobes à courbure continue, avec une répartition des masses et une massivité suffisante entre des enveloppes interne et externe afin de réaliser une répartition des contraintes satisfaisante.

Plus précisément, l'invention a pour objet un joint torique en matériau élastique, de section droite pleine à quatre lobes convexes reliés par quatre lignes à courbure concave continue, destiné à être disposé dans une gorge annulaire pour y être comprimé et présentant, en section, un axe longitudinal et un axe de symétrie radial perpendiculaire à l'axe longitudinal, caractérisé en ce que les quatre lobes sont inscrits dans une enveloppe rectangulaire externe et circonscrits à une enveloppe rectangulaire interne, en ce que le rectangle externe présente un coefficient de rectangularité supérieur à sensiblement 1,2, en ce qu'il présente un coefficient de massivité formé par le rapport des aires couvertes par les rectangles externe et interne est compris sensiblement entre 1,25 et 3, alors qu'il présente des coefficients de déformabilités axiale et radiale supérieurs à des seuils prédéterminés, ainsi qu'un coefficient d'asymétrie axiale compris entre 1 et 0,5 et un coefficient de compression compris entre sensiblement 1,1 et 1,3, et en ce que, pour résister à l'extrusion, ce joint présente un coefficient de massivité qui tend vers les valeurs les plus proches de l'unité et un coefficient de compression qui tend vers les valeurs les plus faibles, alors que, pour réduire l'effort au montage, il présente des coefficients de massivité et de déformabilité axiale qui tendent vers des valeurs maximales.

Dans ce qui précède :
- le matériau élastique du joint selon l'invention peut être un matériau thermoplastique, un élastomère, par exemple de type polybutadiène ou polypropylène nitrile hydrogéné ou un autre caoutchouc ;
- le coefficient de rectangularité est égal au rapport entre la longueur et la largeur du rectangle ;
- le coefficient de déformabilité axiale est défini comme le produit entre la hauteur de rétrécissement axial par la distance entre les points de contact des lobes avec les côtés du rectangle externe correspondants, ce produit étant rapporté à la différence entre les aires des rectangles externe et interne ;
- le coefficient de déformabilité radiale est déterminé par la différence entre les largeurs des rectangles externe et interne rapportée à la largeur du rectangle externe ;
- le coefficient d'asymétrie axiale est défini comme la distance de l'axe longitudinal à la longueur du rectangle interne disposée du côté de l'ouverture de la gorge, rapportée à la distance de cet axe à la longueur de ce rectangle disposée du côté du fond de la gorge ; et
- le coefficient de compression est défini comme la largeur de gorge rapportée à la largeur du rectangle interne.

L'invention permet notamment de réaliser la gorge par simple roulage, de coût sensiblement réduit, et non par usinage de deux gorges successives, grâce à l'encombrement réduit d'une gorge unique même munie de pentes relativement plus importantes du fait du roulage.

Selon des formes de réalisation particulières, la section du joint torique présente :
- une répartition des hauteurs de rétrécissement radial, définie par la hauteur de rétrécissement disposée du côté du fond de gorge rapportée à la hauteur de rétrécissement disposée du côté de l'ouverture de gorge, comprise sensiblement entre 1 et 0,3 ;
- chacun des deux facteurs du coefficient de déformabilité axiale, la hauteur de rétrécissement et la distance entre points de contact des lobes, est borné, après normalisation, par des valeurs extrémales ;
- des valeurs de coefficient de déformabilité radiale comprises entre 0,2 et 0,3, et des valeurs de déformabilité axiale comprises entre 0,05 et 0,25.

L'invention concerne également un procédé d'évaluation de la fonctionnalité d'un joint à double ligne d'étanchéité consistant à élaborer pour un joint donné la valeur d'un critère fonctionnel défini comme le produit multiplié par 100 des coefficients d'asymétrie, de massivité, de compression, de déformabilités axiale et radiale, à positionner la valeur obtenue dans une gamme de valeurs comprise entre 1 et 20, à estimer les joints dont le critère de fonctionnalité ont des valeurs qui tendent vers l'unité comme hautement résistants à l'extrusion, à les estimer comme présentant une haute montabilité lorsque ces valeurs sont les plus proches de 20, et à les estimer comme présentant une capacité de résistance ou de montabilité lorsque les valeurs du critère de fonctionnalité varient entre sensiblement 6 et 14, en prenant en considération, comme critère secondaire, respectivement le coefficient de déformabilité axiale pour la résistance à l'extrusion et le produit du coefficient de massivité par le coefficient de compression pour la montabilité.

Selon un mode particulier, le procédé prend en compte comme valeurs des critères secondaires, les valeurs inférieures à 0,15 pour le coefficient de déformabilité axiale, et les valeurs supérieures à 2 pour le produit du coefficient de massivité par le coefficient de compression.

Avantageusement, l'utilisation d'un tel critère de fonctionnalité permet d'optimiser les cotes du joint de forme quadrilobaire selon l'invention en fonction des principales contraintes d'environnement, c'est-à-dire la résistance à l'extrusion et l'effort au montage souhaités.

Les conditions générales de fonctionnement du joint selon l'invention sont respectées, c'est-à-dire une compression de joints comprises entre 5 et 40%, la largeur de gorge restant toujours suffisante pour absorber le volume du joint comprimé en tenant compte, le cas échéant, de son gonflement dans le fluide de fonctionnement.

Avantageusement, l'invention permet de réaliser des joints aptes à subir des pressions relativement élevées, par exemple dans un circuit de climatisation à fluide circulant à 30 bars, sans présenter de difficultés au montage. La tenue à des pressions plus élevées, par exemple jusqu'à 100 à 150 bars dans des circuits d'assistance de direction automobile, ou de 300 bars dans les circuits de freinage, est également garantie avec des joints calibrés selon l'invention, sans présenter de problème au montage.

Avantageusement, l'invention permet de former une pièce aisément moulable en deux parties, afin de préserver l'intérêt économique de la solution.

D'autres caractéristiques et avantages de l'invention apparaîtront à la lecture de la description suivante d'exemples de réalisation, présentées à titre non limitatif en référence aux figures annexées, qui représentent respectivement :
- les figure 1a et 1b, des vues schématiques en coupe d'un joint selon l'invention monté en compression_dans la gorge de l'alésage d'un corps et dans la gorge d'un arbre central ;
- la figure 2, la section droite d'un premier exemple de joint selon l'invention apte à résister à des pressions élevées dans un circuit de climatisation ;
- la figure 3, le joint selon la figure 2 après montage dans la gorge,
- la figure 4, le joint torique de l'exemple précédent vu en coupe, une fois comprimé par un arbre central ;
- les figures 5 à 8, en section droite, d'autres exemples de différents joints pour des circuits à haute pression ; et
- les figures 9 à 11, en section droite, des exemples de différents joints selon l'invention, plus particulièrement aptes à présenter une montabilité élevée pour des circuits à faible pression.

Les signes de référence identiques sur les figures renvoient à des éléments identiques ou équivalents.

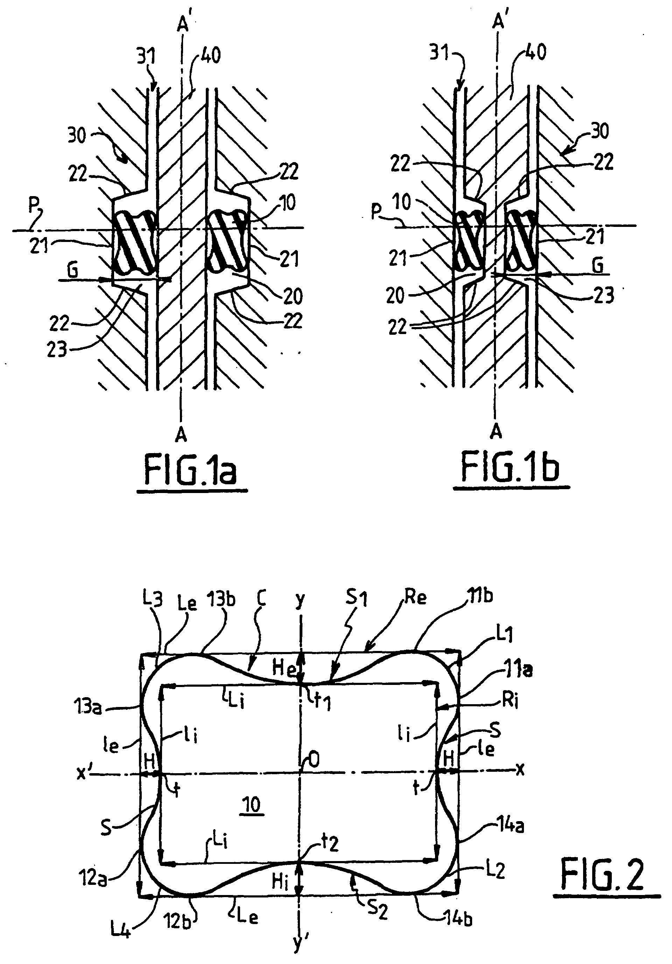

Selon le type d'application envisagé, et comme illustré en coupe longitudinale aux figures 1a et 1b, les joints toriques 10 sont montés dans une gorge annulaire 20, de largeur G, respectivement réalisée dans un corps 30 qui présente un alésage 31 ou dans un arbre 40. L'ensemble présente une symétrie de révolution autour d'un axe longitudinal A'A et une symétrie radiale autour d'un plan médian P, perpendiculaire à l'axe A'A et passant en milieu de gorge. En fonctionnement, le joint 10 est comprimé entre la gorge 20 et l'arbre 40 (figure 1a) ou le corps 30 (figure 1b). La gorge présente un fond 21, des côtés latéraux 22, et une ouverture 23 à travers laquelle le joint, une fois monté, est comprimé.

La figure 2 illustre la section droite d'un premier exemple de joint selon l'invention apte à résister à des pressions de l'ordre de 30 à 100 bars dans un circuit de climatisation automobile. Tel que représenté, le joint 10 présente en section une double symétrie : une symétrie axiale selon l'axe longitudinal X'-X, et une symétrie radiale selon l'axe Y'-Y, qui est la trace dans le plan de représentation du plan médian P (figures 1a et 1b). L'intersection O des deux axes de symétrie est donc un centre de symétrie pour le joint.

Le joint 10 est formé de quatre lobes identiques, de sections convexes continues L1 à L4, et réunis de manière continue par des surfaces concaves, de sections S pour les concavités axiales situées le long de l'axe X'-X, et S1 et S2 pour les concavités radiales situées le long de l'axe radial Y'-Y. Sur la figure, les références de même parité sont situées d'un même côté de l'axe X'-X.

Le contour C du joint 10 est inscrit dans une enveloppe externe Rₑ, de forme rectangulaire, avec, pour points de contact, les points référencés 11 à 14, indexés a et b suivant que ces points sont en contact avec les largeurs Iₑ et les longueurs Lₑ du rectangle circonscrit Rₑ. Les points de contact, 11a et 14a ou 13a et 12a, disposés sur une même largeur lₑ, sont distants d'un même écart D.

Le contour C est par ailleurs circonscrit à une enveloppe rectangulaire interne Rᵢ tangent audit contour aux points de contact t1, t2 et t, coïncidant avec les points de concavité respectivement radiale (pour t1 et t2) et axiale (pour les points t) situés au plus profond des rétrécissements Hₑ et H, d'une part et H d'autre part, formés par ces concavités sur les axes de symétrie correspondants, respectivement Y'Y et X'X. Le rectangle inscrit Rᵢ est formé de longueurs Lᵢ et de largeurs Iᵢ, respectivement parallèles aux axes de symétrie X'-X et Y'-Y.

Cette section 1 présente un coefficient de rectangularité Lₑ/Iₑ, sensiblement égal à 1,35. Cette valeur est supérieure à la valeur seuil 1, 2 pour garantir un bon coefficient de rectangularité selon l'invention, afin d'obtenir un joint qui puisse à la fois limiter les risques de vrillage du joint au montage et fournir une bonne résistance à l'extrusion du joint sous pression.

Dans cet exemple de réalisation, le coefficient de symétrie K₀, défini comme le rapport des distances de l'axe longitudinal X'-X à chacune des longueurs Iᵢ du rectangle inscrit R_{i,} est égal à 1 puisque la section présente une symétrie axiale par rapport à l'axe X'-X.

Par ailleurs, le joint présente un coefficient de massivité K₁, rapport des aires Sₑ/Sᵢ limitées par les rectangles Rₑ et Rᵢ, égal à 1,49, c'est-à-dire compris entre environ 1,25 et 3. Au-delà de cette gamme de valeur, c'est-à-dire pour une valeur de K₁ supérieure à 3, le joint s'extrude trop aisément. Pour des joints plus particulièrement résistants à l'extrusion, c'est-à-dire aux pressions plus élevées, par exemple supérieures à 200 bars, les valeurs de K₁ tendent vers les valeurs les plus proches de 1. En deçà de cette gamme de valeurs, c'est-à-dire pour des valeurs inférieures à environ 1,2, le joint devient trop massif pour être monté dans des conditions acceptables.

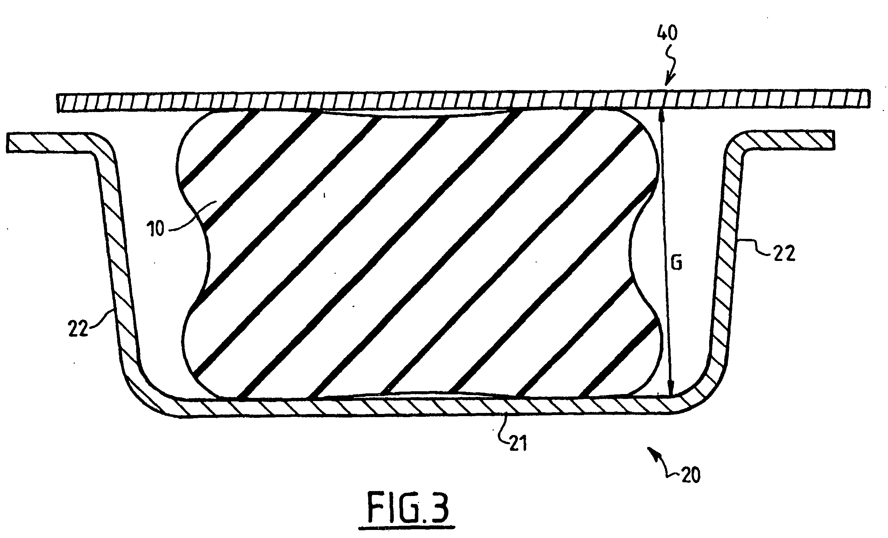

Pour vérifier la montabilité du joint, il convient avantageusement d'établir la valeur du coefficient de compression K2 que va subir le joint au montage, comme illustré à la figure 3, ce coefficient étant défini par le rapport G/Iᵢ, G étant égal à 1,66 mm dans ce type de montage. Dans cet exemple, le joint présente un coefficient K2 de 1,10, soit dans la gamme de valeurs recommandées comprises entre environ 1,1 et 1,3.

Par ailleurs, toujours pour vérifier le caractère montable de ce type de joint plus particulièrement résistant à l'extrusion, d'autres coefficients et cotes sont évalués comme il suit :
- le coefficient de déformabilité axiale K3, défini par la quantité H x D rapportée au différentiel des aires des enveloppes, Sₑ - Sᵢ, égale à 0,09 est bien supérieur à la valeur seuil 0,05 recommandée ;
- les facteurs normalisés H/Lₑ et D/Iₑ du coefficient K3, de valeurs respectivement égales à 0,053 et 0,60, sont bornés par les valeurs extrêmes à respecter de préférence, c'est-à-dire respectivement entre 0,05 et 0,25 pour le facteur H/Lₑ et entre 0,20 et 0,80 pour le facteur D/Iₑ.
- le coefficient de déformabilité radiale K4, égal à (Iₑ - Iᵢ)/Iₑ, qui vaut 0,25 dans cet exemple, se trouve au centre d'une plage 0,2-0,3 plus particulièrement recommandée.

Pour assurer une bonne équi-répartition des contraintes sur les quatre lobes, il est avantageux de vérifier la répartition des hauteurs de rétrécissement radial, définie par la hauteur de rétrécissement Hᵢ disposée du côté du fond de gorge rapportée à la hauteur de rétrécissement Hₑ disposée du côté de l'ouverture de gorge. Dans le cas illustré, cette répartition est égale à 1 du fait de la symétrie du joint, valeur étant comprise dans la gamme recommandée qui peut aller jusqu'à 0,3 pour les joints asymétriques

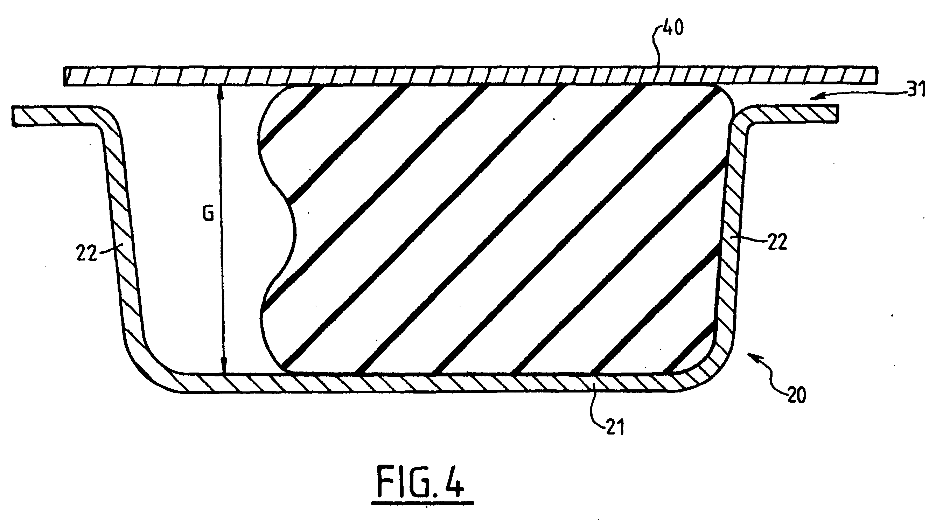

La vue en coupe selon la figure 4 illustre le joint torique de l'exemple précédent vu en coupe, une fois comprimé par l'arbre 40 dans le circuit de climatisation. Mis sous pression égale à environ 30 bars, exercée par le fluide de climatisation, la section du joint 10 présente, comme illustré sur la figure, une déformation. En particulier, il apparaît que la section n'est pas extrudée dans le jeu radial 32 entre l'arbre 40 et la structure 30, la portion du lobe L₁ située en regard de cet espace 32 ne pénétrant pas dans ce dernier.

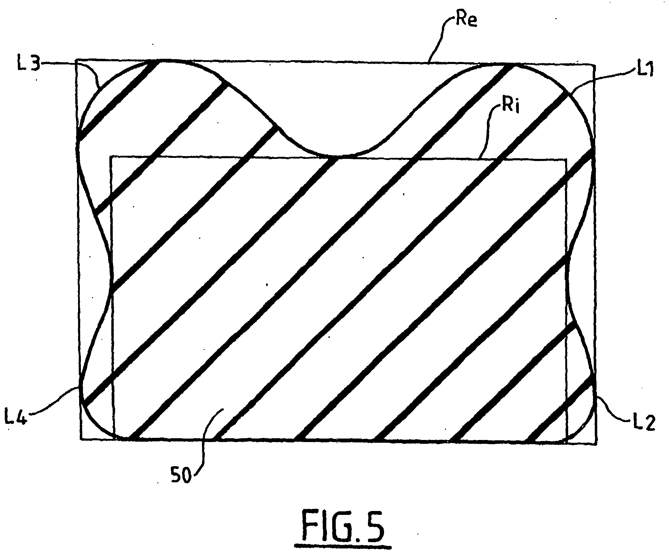

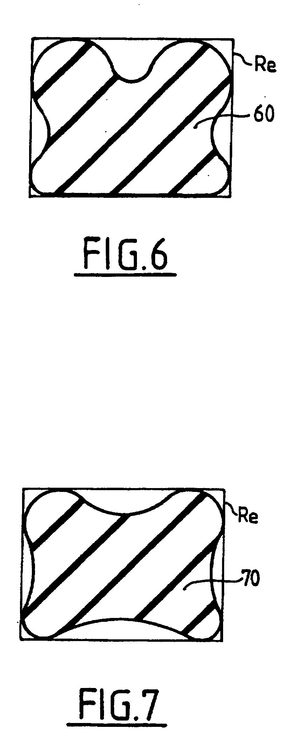

Les figures 5 à 8 illustrent d'autres exemples de sections de différents joints selon l'invention, respectivement 50, 60, 70 et 80, plus particulièrement aptes résister à l'extrusion sous des pressions de plus en plus élevées, pouvant aller par exemple jusqu'à des pressions de 100 bars (circuits de direction assistée) à 300 bars (pour des circuits de freinage). Les différentes cotes et coefficients de ces joints sont résumés dans le tableau I ci-après.

Lorsqu'il s'agit de réaliser des raccords sous des pressions plus faibles, par exemple de l'ordre de 5 bars pour des raccords de type à air, le critère de résistance à l'extrusion n'est plus aussi critique. Il est alors possible, d'optimiser l'effort de montage pour des joints de relativement plus grandes dimensions, par exemple de diamètre intérieur supérieur à 30 mm, sans que les lobes deviennent trop fragiles, c'est-à-dire en conservant un coefficient de massivité K1 raisonnable, en particulier inférieur à 3.

Cette optimisation de la montabilité se traduit par un effort de montage réduit, facteur à prendre en considération sur une chaîne de montage automobile, en particulier pour des joints de cette taille, induisant facilement des efforts de plusieurs dizaines de daN. Cette optimisation sans risque de vrillage ou de retournement au montage, est essentiellement obtenue en réalisant des joints selon les critères de l'invention qui présentent des coefficients de massivité K1 et de déformabilité axiale K3 qui tendent vers des valeurs maximales, c'est-à-dire respectivement environ 1,8 à 2,5 pour K1 et environ 0,25 pour K3.

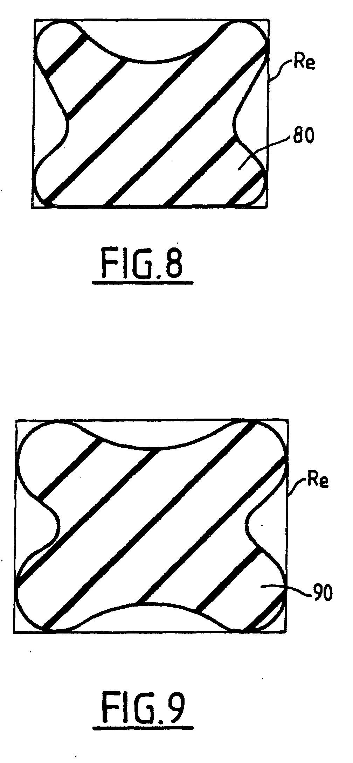

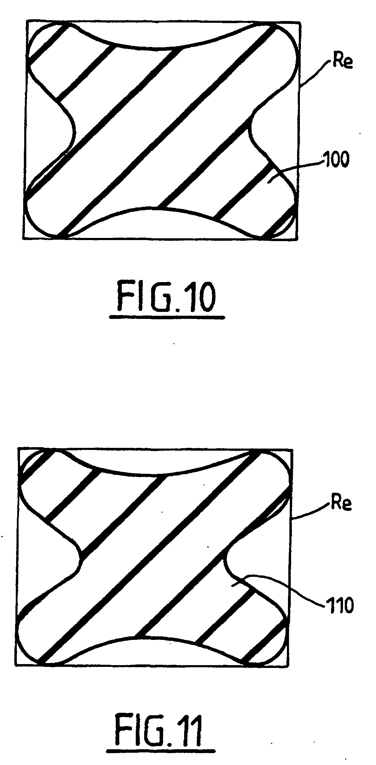

Les figures 9 à 11 illustrent des exemples de section de différents joints selon l'invention, respectivement 90, 100 et 110, plus particulièrement aptes à présenter une montabilité élevée tout en présentant une bonne résistance à l'extrusion pour des pressions qui restent relativement faibles, de l'ordre de 5 à 10 bars.

Dans le tableau I qui suit, sont résumés les valeurs des cotes principales D, H et G ainsi que les coefficients K0 à K4, et le produit K représentant le critère de fonctionnalité, pour les différents joints 10 à 100 tels qu'illustrés aux figures 2, et 5 à 11, et classés dans l'ordre des valeurs de K croissantes.

**TABLEAU I**

| Référence JOINT | D (mm) | H (mm) | G | K0 | K1 | K2 | K3 | K4 | K |
|---|---|---|---|---|---|---|---|---|---|
| 60 | 0,95 | 0,14 | 1,66 | 0,50 | 1,49 | 1,10 | 0,07 | 0,25 | 1,53 |
| 50 | 1,25 | 0,14 | 1,66 | 0,50 | 1,49 | 1,10 | 0,10 | 0,25 | 2,02 |
| 70 | 1,25 | 0,14 | 1,66 | 0,88 | 1,49 | 1,11 | 0,10 | 0,25 | 3,54 |
| 10 | 1,20 | 0,14 | 1,66 | 1,00 | 1,49 | 1,10 | 0,09 | 0,25 | 3,9 |
| 80 | 2,58 | 0,69 | 3,40 | 0,54 | 1,81 | 1,22 | 0,23 | 0,23 | 6,1 |
| 90 | 2,30 | 0,75 | 3,20 | 1,00 | 1,98 | 1,18 | 0,20 | 0,26 | 12,1 |
| 100 | 2,64 | 0,87 | 3,20 | 1,00 | 2,13 | 1,18 | 0,24 | 0,26 | 16,2 |
| 110 | 2,24 | 1,14 | 3,20 | 1,00 | 2,63 | 1,19 | 0,23 | 0,28 | 19,8 |

Dans ce tableau, les valeurs de coefficient de déformabilité radiale K4 restent bien comprises entre 0,2 et 0,3, et les valeurs de déformabilité axiale K3 comprises entre 0,05 et 0,25.

Ce tableau montre que lorsqu'il s'agit de définir la géométri(qu)e d'un joint selon l'invention, le critère fonctionnel K, produit de tous les coefficients K0 à K4, couvre sensiblement une gamme de valeurs allant globalement de 1 à 20.

Plus précisément, une évaluation de la fonctionnalité d'un joint à double ligne d'étanchéité consiste à élaborer la valeur de ce critère K pour un joint donné selon l'invention, à positionner la valeur obtenue dans la gamme de valeurs entre 1 et 20, à estimer les joints dont le critère de fonctionnalité ont des valeurs qui tendent :
- vers l'unité comme hautement résistants à l'extrusion ;
- pour les valeurs plus proches de 20 comme présentant une haute montabilité ;
- pour les valeurs du critère de fonctionnalité variant sensiblement entre 6 et 14 comme résistants ou facilement montables en prenant en considération un critère secondaire.

Comme critère secondaire, il convient de prendre le coefficient de déformabilité axiale K3 comme favorisant la résistance à l'extrusion et le produit K1 x K2 comme favorisant la montabilité. Par exemple, comme valeurs des critères secondaires, il est possible de déduire des valeurs inférieures à 0,15 pour K3, et des valeurs supérieures à 2 pour le produit K1 x K2.

L'invention n'est pas limitée aux exemples de réalisation décrits et illustrés.

## Revendications

1. Joint torique en matériau élastique, de section droite pleine à quatre lobes convexes reliés par quatre lignes (S, S1, S2) à courbure concave continue, destiné à être disposé dans une gorge annulaire (20) pour y être comprimé et présentant, en section, un axe longitudinal (X'X) et un axe de symétrie radial (Y'Y) perpendiculaire à l'axe longitudinal, **caractérisé en ce que** les quatre lobes (L1 à L4) sont inscrits dans une enveloppe rectangulaire externe (Rₑ) et circonscrits à une enveloppe rectangulaire interne (Rᵢ), **en ce que** le rectangle externe présente un coefficient de rectangularité supérieur à sensiblement 1,2, **en ce qu'**il présente un coefficient de massivité K1 formé par le rapport des aires (Sₑ, Sᵢ) couvertes par les rectangles externe et interne compris sensiblement entre 1,25 et 3, alors qu'il présente des coefficients de déformabilité axiale K3 et de déformabilité radiale K4 supérieurs à des seuils prédéterminés, ainsi qu'un coefficient d'asymétrie axiale K0 compris entre 1 et 0,5 et un coefficient de compression K2 compris entre sensiblement 1,1 et 1,3, et **en ce que**, pour résister à l'extrusion, ce joint présente un coefficient de massivité K1 qui tend vers les valeurs les plus proches de l'unité et un coefficient de compression K2 qui tend vers les valeurs les plus faibles, alors que, pour réduire l'effort au montage, il présente des coefficients de massivité K1 et de déformabilité axiale K3 qui tendent vers des valeurs maximales.

2. Joint torique selon la revendication 1, dans lequel une répartition des hauteurs de rétrécissement radial, définie par la hauteur de rétrécissement (Hᵢ) disposée du côté du fond de gorge (21) rapportée à la hauteur de rétrécissement (Hₑ) disposée du côté de l'ouverture de gorge (23), est comprise sensiblement entre 1 et 0,3.

3. Joint torique selon l'une des revendications 1 et 2, dans lequel chacun des deux facteurs (H, D) du coefficient de déformabilité axiale, la hauteur de rétrécissement et la distance entre points de contact des lobes, est borné, après normalisation, respectivement par des valeurs extrémales.

4. Joint torique selon l'une quelconque des revendications précédentes, dans lequel des valeurs de coefficient de déformabilité radiale sont comprises entre 0,2 et 0,3, et des valeurs de déformabilité axiale sont comprises entre 0,05 et 0,25.

5. Joint torique selon l'une quelconque des revendications précédentes, **caractérisé en ce que** sa résistance à l'extrusion et sa montabilité sont déterminées par la valeur d'un critère fonctionnel, défini comme le produit multiplié par 100 des coefficients d'asymétrie, de massivité, de compression, de déformabilité radiale et de déformabilité axiale, compris entre 1 et 20, cette valeur tendant vers l'unité lorsque le joint offre une haute résistance à l'extrusion et vers 20 lorsque le joint présente une haute capacité à la montabilité

6. Joint torique selon la revendication précédente, **caractérisé en ce que** la valeur du critère fonctionnel est comprise sensiblement entre 6 et 14 lorsque le joint présente une fonctionnalité orientée vers une résistance à l'extrusion ou une capacité à la montabilité, en prenant en considération les valeurs prises par un critère secondaire défini, respectivement, par le coefficient de déformabilité axiale pour la résistance à l'extrusion ou par le produit du coefficient de massivité par le coefficient de compression pour la montabilité.

7. Joint torique selon la revendication précédente, **caractérisé en ce qu'**il est pris en compte, comme valeurs de critère secondaire, les valeurs inférieures à 0,15 pour le coefficient de déformabilité axiale, et les valeurs supérieures à 2 pour le produit du coefficient de massivité par le coefficient de compression.

## Patentansprüche

1. Wulstförmiges Dichtungselement aus elastischem Material, mit einem massiven rechteckigen Querschnitt mit vier konvexen Ausbuchtungen, die durch vier Linien (S, unter Verwendung, S2) mit stetiger konkaver Krümmung verbunden sind, dazu bestimmt, in einer ringförmigen Hohlkehle (20) angeordnet zu sein, um dort zusammengedrückt zu werden, welches im Querschnitt eine Längsachse (X'X)und eine zur Längsachse senkrechte radiale Symmetrieachse (Y'Y) aufweist, **dadurch gekennzeichnet, dass** die vier Ausbuchtungen (L1 bis L4) von einer rechteckigen äußeren Umhüllenden (Rₑ) umfangen und von einer inneren rechteckigen Umhüllenden (Rᵢ) umschrieben werden, dadurch dass das äußere Rechteck einen Koeffizienten der Rechteckigkeit von mehr als im Wesentlichen genau 1,2 aufweist, dadurch dass es einen Koeffizienten der Massivität K1, gebildet durch das Verhältnis der von dem äußeren und dem inneren Rechteck bedeckten Flächen (Sₑ, Sᵢ) aufweist, der im Wesentlichen genau zwischen 1,25 und 3 liegt, während es Koeffizienten der axialen Verformbarkeit K3 und der radialen Verformbarkeit K4 höher als vorbestimmte Grenzwerte aufweist, ebenso wie einen zwischen 1 und 0,5 liegenden Koeffizienten der radialen Asymmetrie K0 und einen zwischen im Wesentlichen genau zwischen 1,1 und 1,3 liegenden Kompressionskoeffizienten K2, und dadurch, dass dieses Dichtungselement, um dem Plattgedrücktwerden zu widerstehen, einen Koeffizienten der Massivität K1 aufweist, der auf Werte sehr nahe 1 zugeht, und einen Kompressionskoeffizienten, der auf die geringsten Werte zugeht, während es, um die Beanspruchung beim Einbau zu verringern, Koeffizienten der Massivität K1 und der axialen Verformbarkeit K3 aufweist, die auf Maximalwerte zugehen.

2. Wulstförmiges Dichtungselement gemäß Anspruch 1, bei dem eine Aufteilung der Höhen der radialen Einschnürung, definiert durch die Höhe der an der Bodenseite der Hohlkehle (21) angeordneten Einschnürung (Hᵢ), bezogen auf die Höhe der an der Öffnungsseite (23) der Hohlkehle angeordneten Einschnürung (Hₑ), im Wesentlichen genau zwischen 1 und 0,3 liegt.

3. Wulstförmiges Dichtungselement gemäß einem der Ansprüche 1 und 2, bei dem jeder der beiden Faktoren (H, D) des Koeffizienten der axialen Verformbarkeit, die Höhe der Einschnürung und der Abstand zwischen Berührungspunkten der Ausbuchtungen nach Normalisierung jeweils durch Extremwerte begrenzt ist.

4. Wulstförmiges Dichtungselement gemäß irgend einem der vorhergehenden Ansprüche, bei dem Werte des Koeffizienten der radialen Verformbarkeit zwischen 0,2 und 0,3 liegen, und Werte der axialen Verformbarkeit zwischen 0,05 und 0,25 liegen.

5. Wulstförmiges Dichtungselement gemäß irgend einem der vorhergehenden Ansprüche, **dadurch gekennzeichnet, dass** sein Widerstand gegen das Plattgedrücktwerden und seine Anbringbarkeit durch den Wert eines funktionellen Kriteriums vorbestimmt sind, der als das mit 100 multiplizierte Produkt der Koeffizienten der Asymmetrie, der Massivität, der Kompression, der radialen Verformbarkeit und der axialen Verformbarkeit definiert ist und der zwischen 1 und 20 liegt, wobei dieser Wert auf eins zugeht, wenn das Dichtungselement einen hohen Widerstand bei dem Plattgedrücktwerden leistet, und gegen 20, wenn das Dichtungselement bei der Anbringbarkeit eine hohe Tauglichkeit aufweist.

6. Wulstförmiges Dichtungselement gemäß dem vorhergehenden Anspruch, **dadurch gekennzeichnet, dass** der Wert des funktionellen Kriteriums im Wesentlichen genau zwischen 6 und 14 liegt, wenn das Dichtungselement eine auf einen Widerstand bei dem Plattgedrücktwerden oder auf Tauglichkeit bei der Anbringbarkeit orientierte Funktionalität aufweist, unter Inbetrachtziehung der von einem sekundären Kriterium eingenommenen Werte, das für den Widerstand gegen das Plattgedrücktwerden durch den Koeffizienten der axialen Verformbarkeit, beziehungsweise für die Anbringbarkeit durch das Produkt aus dem Koeffizienten der Massivität und dem Kompressionskoeffizienten definiert ist.

7. Wulstförmiges Dichtungselement gemäß dem vorhergehenden Anspruch, **dadurch gekennzeichnet, dass** es als Werte des sekundären Kriteriums die Werte niedriger als 0,15 für den Koeffizienten der axialen Verformbarkeit, und die Werte höher als 2 für das Produkt aus dem Koeffizienten der Massivität und dem Kompressionskoeffizienten annimmt.

## Claims

1. O-ring joint made of elastic material with a solid cross-section having four convex lobes joined together by four lines (S, S1, S2) having a continuous concave curvature, intended to be arranged in an annular groove (20) in order to be compressed therein and having, in cross-section, one longitudinal axis (X'X) and one radial axis of symmetry (Y'Y) perpendicular to the longitudinal axis, **characterized in that** the four lobes (L1 to L4) are inscribed inside a rectangular external envelope (Rₑ) and are circumscribed on a rectangular internal envelope (Rᵢ), **in that** the external rectangle has a rectangularity coefficient greater than approximately 1.2, **in that** it has a massiveness coefficient K1 formed by the ratio of the areas (Sₑ, Sᵢ) covered by the external and internal rectangles comprised approximately between 1.25 and 3, while it has coefficients of axial deformability K3 and of radial deformability K4 greater than predetermined thresholds, together with an axial asymmetry coefficient K0 comprised between 1 and 0.5 and a compression coefficient K2 comprised between approximately 1.1 and 1.3, and **in that**, in order to resist extrusion, this joint has a massiveness coefficient K1 that tends towards values most closely approaching unity and a compression coefficient K2 that tends towards the lowest values while, in order to reduce the installation force, it has coefficients of massiveness K1 and of axial deformability K3 that tend towards maximum values.

2. O-ring joint according to Claim 1, in which a distribution of the radial narrowing heights, defined by the narrowing height (Hᵢ) situated on the side facing the base of the groove (21) relative to the narrowing height (Hₑ) situated on the open side of the groove (23), is comprised approximately between 1 and 0.3.

3. O-ring joint according to one of the Claims 1 and 2, in which each of the two factors (H, D) of the axial deformability coefficient, the narrowing height and the distance between points of contact of the lobes, is limited, after normalisation, by extreme values in each case.

4. O-ring joint according to any of the foregoing Claims, in which radial deformability coefficient values are comprised between 0.2 and 0.3, and axial deformability values are comprised between 0.05 and 0.25.

5. O-ring joint according to any of the foregoing Claims, **characterized in that** its resistance to extrusion and its installability are determined by the value of a functional criterion defined as the product multiplied by 100 of the coefficients of asymmetry, of massiveness, of compression, of radial deformation and of axial deformation comprised between 1 and 20, this value tending towards unity when the joint presents high resistance to extrusion and towards 20 when the joint has a high installability capacity.

6. O-ring joint according to the foregoing Claim, **characterized in that** the value of the functional criterion is comprised approximately between 6 and 14 when the joint has a functionality directed towards resistance to extrusion or installability capacity, and taking into consideration the values assumed by a secondary criterion defined, respectively, by the axial deformability coefficient for resistance to extrusion or by the product of the massiveness coefficient multiplied by the compression coefficient for installability.

7. O-ring joint according to the foregoing Claim, **characterized in that**, as values of the secondary criterion, values less than 0.15 are taken into account for the axial deformability coefficient, and values greater than 2 are taken into account for the product of the massiveness coefficient multiplied by the compression coefficient.
